# EUROPEAN PATENT APPLICATION

(11) **EP 2 745 680 A1**
(43) Date of publication of application: **25.06.2014**
(21) Application number: 13197016.2
(22) Date of filing: 12.12.2013
(51) Int. Cl.: A01K 1/02

(54) **Device for the transport of domestic animals**

(30) Priority: 18.12.2012 DE 202012104950 U
(71) Applicant: Goodbye S.A.R.L., 5465 Waldbredimus (LU)
(72) Inventor: Buhre, Melanie, 5465 Waldbredimus (LU); Weinmann, Gerold, 57720 Volmunster (FR)
(74) Representative: Martin Santos, Victoria Sofia

(57) **Abstract**

Apparatus for transporting pets, mainly dogs and cats, with a frame constructed of struts and with a covering (1) forming the walls, characterized in that the device is substantially parallelepiped formed and it has, at the lateral sides and in one of the longitudinal sides, closable openings (2) of a plastic mesh fabric.

## Description

The invention relates to a device for the transport of domestic animals, in particular dogs or cats, with a frame constructed of struts and with a stretched covering, which forms the walls.

Such devices are also known as an animal box. They are called a dog box for example depending on the size, while smaller models can also be used for the transport of cats, rabbits or the like. The boxes serve to provide the animal with familiar surroundings, either when in a strange environment, such as hotel rooms or the like, or in a vehicle or aircraft.

The devices may have a rigid housing. DE 101 00 601 A1 for example describes a carrying box for small animals, especially cats, which has an egg-shaped body, which consists of a shell-shaped base and the connecting hooded cover section.

Devices are also known with a frame supporting a stretched cover. DE 20 2011 051 541 U1 describes an animal box with a frame formed of struts and a stretched cover, which forms the walls of the animal box, in which a strap is provided which connects at both its ends to the animal box, has a length of at least 1 metre and which has a closable connection at at least one point.

WO 2006/099424 A2 describes a device for the transport of domestic animals, which has an opening, which allows the animal owner to insert one hand into the device, without the animal being able to escape from the device through this opening.

The device is based on the task of creating a better device for the transport of domestic animals, which allows the lowest possible weight and optimum comfort for the animal being transported.

The task is solved by the invention in that the device has an essentially parallelepiped form, and has closable openings of a plastic mesh fabric at both short sides and one of the long sides.

The invention is based on the fact that known devices to the transport of domestic animals offer too little viewing area and too few openings for the animal being transported. By providing three openings fitted with translucent plastic mesh, the animal can enter or leave the device easily, while the openings serve simultaneously as viewing areas.

It is an integral part of the invention that the openings of plastic mesh fabric can be secured by single, or preferably double, Velcro fasteners.

This enables easy and secure closure of the openings.

An advantageous design feature of the invention is that a surface element of plastic mesh fabric is also provided on the upper side of the device.

In this connection, it is also helpful if an opening cover is provided for the plastic mesh fabric on the upper side of the device.

A preferred design feature of the invention is that the device is provided on the other long side with at least one closable hand insertion opening.

The animal owner can therefore stroke the animal being transported in the device in order to keep it calm.

The invention also consists of a firm base of the device, which rests on the frame.

In has been found in the course of the invention that the known devices for the transport of domestic animals with a frame and stretched cover do not have a rigid base, so that the animal has no firm footing when the device is lifted, and therefore already feels insecure.

A further development of the invention consists of a weight measuring device which is integrated into the base.

This enables the weight of the animal in the device to be determined, and the total weight of the device, i.e. the weight of the animal and the weight of the device, to be displayed on a weight display fitted to the device.

A further advantage is that the device is provided with carrying handles.

Finally, it is also helpful that a removable carrying strap should preferably be provided.

The invention is explained in greater detail below with the aid of diagrams:
Fig. 1 Front view of the device subject of the invention,
Fig. 2 Rear view of the device subject of the invention,
Fig. 3 Side view of the device subject of the invention,
Fig. 4 Plan view of the device subject of the invention.

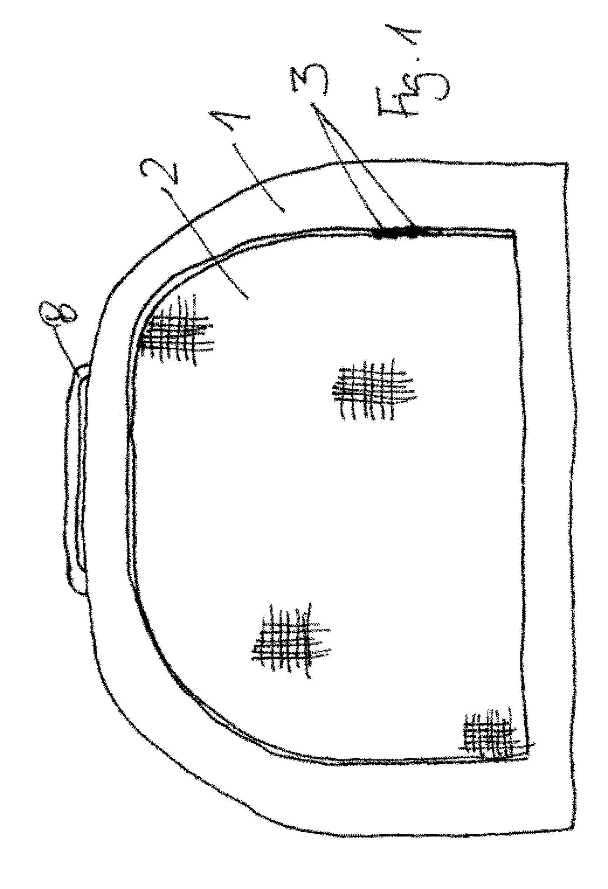

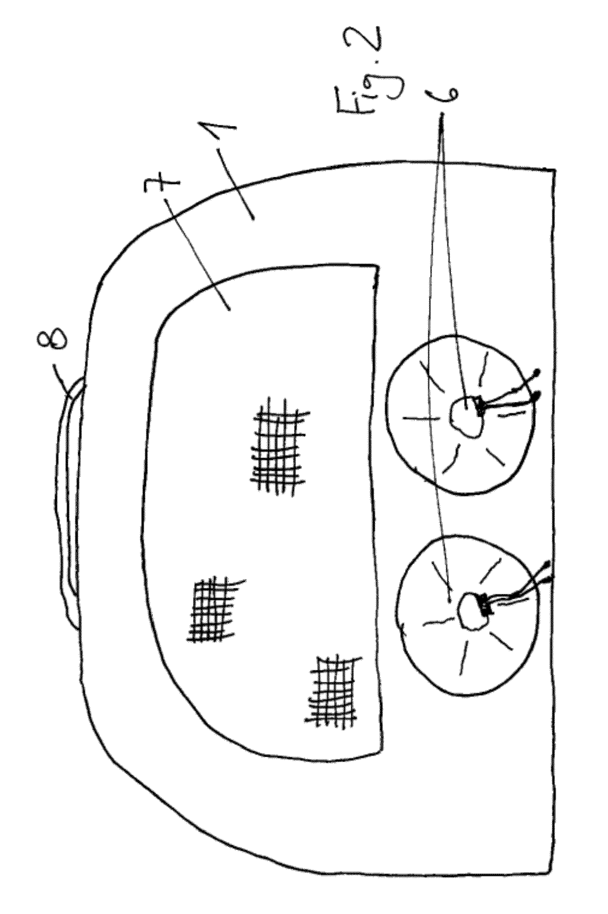

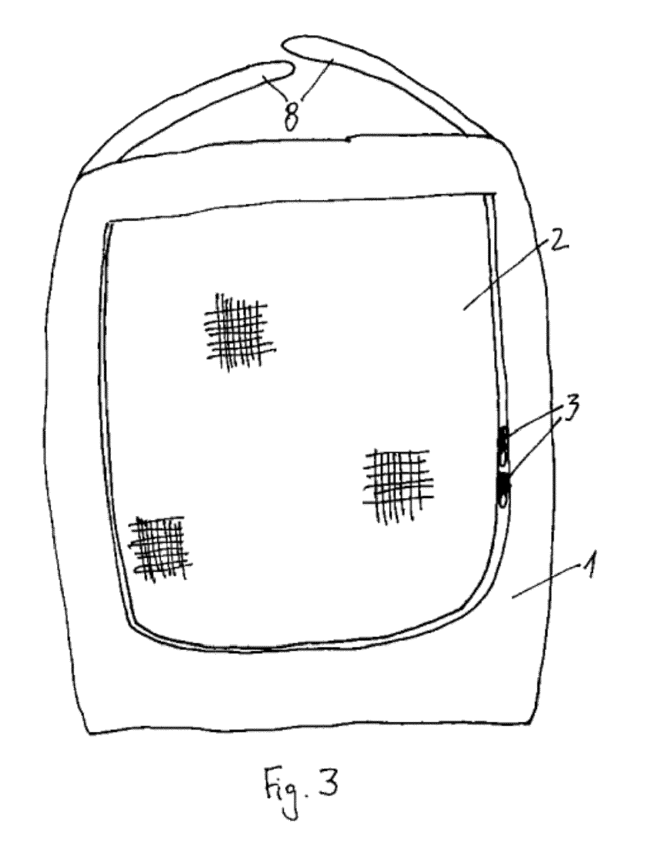

The device subject of the invention for the transport of domestic animals, in particular dogs or cats, has a parallelepiped frame formed of struts,
which is provided with a stretched cover 1, which forms the walls. It can be seen from Figs. 1 to 4 that closable openings 2 of plastic mesh fabric are provided at both short sides and one of the long sides. The plastic mesh fabric used may for example be a PVC mesh fabric with a specific weight of 360 g/m2. Plastic mesh fabric of this type is both very durable and also permeable to light and air, which enables the animal being transported in the device to be aware of its environment. The openings 2 of plastic mesh fabric are secured by single, or preferably double, Velcro fasteners 3.

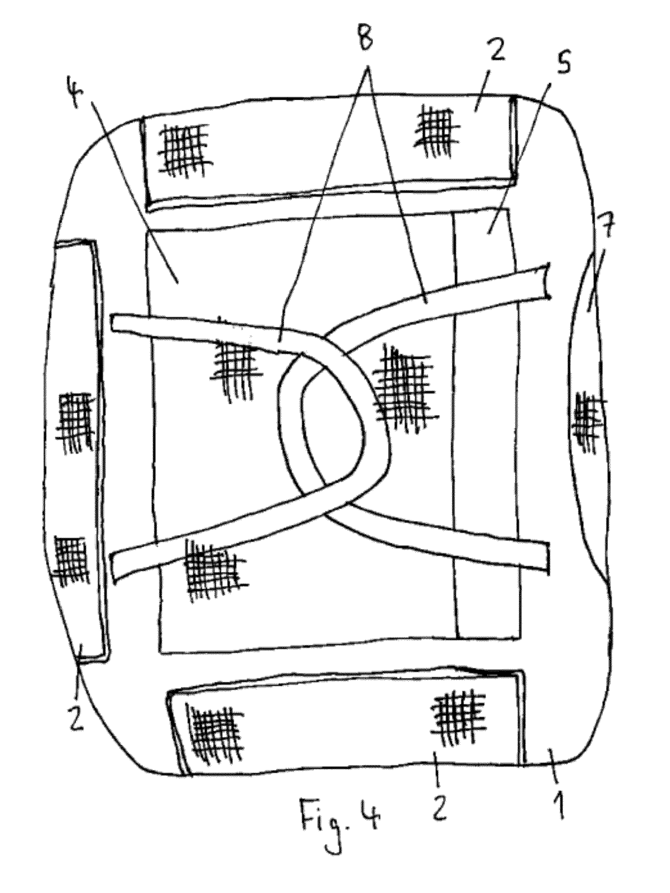

A surface element 4 of plastic mesh fabric is also provided on the upper side of the device. A cover 5 is provided for this surface element, with which the surface element 4 can be covered. Fig. 4 shows the cover 5 in the rolled-up condition.

On the other long side, the device has two closable hand insertion openings 6, which enable the animal owner to insert a hand into the opening in order to stroke the animal. A further surface element 7 of plastic mesh fabric is arranged above the two hand insertion openings 6.

It can be seen that the device is fitted with two carrying handles 8. A preferably removable carrying strap can also be provided.

In order to offer the animal a firm footing at all times, the device is equipped with a firm base, which rests on the frame. A weight measuring device can be integrated into the base, which enables the weight of the animal to be determined, and the total weight of the device, i.e. the weight of the animal and the weight of the device, to be displayed on a weight display. The base should preferably be designed to be removable.

## Claims

1. Device for the transport of domestic animals, in particular dogs or cats, with a frame constructed of struts and with a stretched covering (1), which forms the walls, **characterised by the fact** that the device has an essentially parallelepiped form, and has closable openings (2) of a plastic mesh fabric at both short sides and one of the long sides.

2. Device in accordance with Claim 1, **characterised by** the fact that the openings (2) of plastic mesh fabric can be secured by single, or preferably double, Velcro fasteners (3).

3. Device in accordance with Claims 1 or 2, **characterised by** the fact that a surface element (4) of plastic mesh fabric is arranged on the upper side of the device.

4. Device in accordance with Claim 3, **characterised by** the fact that an opening cover (5) is provided for the surface element (4) of plastic mesh fabric of the upper side.

5. Device in accordance with one of the Claims 1 to 4, **characterised by** the fact that the device is provided on the other long side with at least one closable hand insertion opening (6).

6. Device in accordance with one of the Claims 1 to 5, **characterised by** the fact that the device has a firm base, which rests on the frame.

7. Device in accordance with one of the Claims 1 to 6, **characterised by** the fact that a weight measuring device is integrated into the base.

8. Device in accordance with one of the Claims 1 to 7, **characterised by** the fact that the device is equipped with carrying handles (8).

9. Device in accordance with one of the Claims 1 to 8, **characterised by** the fact that the device is provided with a preferably removable carrying strap.
